# EUROPEAN PATENT APPLICATION

(11) **EP 4 644 169 A1**
(43) Date of publication of application: **05.11.2025**
(21) Application number: 24172950.8
(22) Date of filing: 29.04.2024
(51) Int. Cl.: B60L 58/12, B60L 58/13, B60L 50/60

(54) **METHOD AND COMPUTER SYSTEM FOR CONTROLLING A CHARGING CYCLE OF AN ENERGY STORAGE SYSTEM OF AN ELECTRIC VEHICLE, COMPUTER PROGRAM PRODUCT, A NON-TRANSITORY COMPUTER-READABLE MEDIUM, A CONTROL SYSTEM AND AN ELECTRIC VEHICLE**

(71) Applicant: Volvo Construction Equipment AB, 631 85 Eskilstuna (SE)
(72) Inventor: Beer, Jeannine-Marie, 54329 Konz (DE); Weirich, Christian, 54329 Konz (DE); Dusemund, Björn, 54292 Trier (DE); Kasel, Andreas, 54329 Konz (DE)
(74) Representative: Lavoix

(57) **Abstract**

A method (1000) for controlling a charging cycle of an energy storage system (2) of an electric vehicle (1), in particular an electric compact wheel loader, in a storage mode, the method comprising following steps: determining (1010) a current state of charge value representing a current state of charge of the energy storage system during the charging cycle, wherein the current state of charge value is initially determined at a starting time of the charging cycle, wherein the charging cycle is run between a first usage cycle and a second usage cycle of the energy storage system of the vehicle, wherein the second usage cycle is subsequent to the first usage cycle; determining (1020) a usage state of charge value representing a usage state of charge of the energy storage system at an ending time of the charging cycle, which is required for operating the electric vehicle during the second usage cycle in an operation mode; determining (1030) a storage state of charge value representing a storage state of charge of the energy storage system to be reached and maintained during the charging cycle, wherein the determined usage state of charge value is larger than the determined storage state of charge value; determining (1040) a charging cycle duration value representing a duration of the charging cycle, determining (1050) a storage charging control function for controlling the charging of the energy storage system during the charging cycle in the storage mode depending on the determined current state of charge value, the determined usage state of charge value, the determined storage state of charge value, and the determined charging-cycle-duration-value , wherein an output of the storage charging control function is a storage charging control value provided as a control signal for controlling the charging of the energy storage system during the charging cycle.

## Description

### TECHNICAL FIELD

The disclosure relates generally to controlling a charging cycle of an energy storage system of an electric vehicle. In particular aspects, the disclosure relates to a method for controlling a charging cycle of an energy storage system of an electric vehicle in a storage mode. Further, in particular aspects, the disclosure relates to a method for monitoring a capacity of an energy storage system of an electric vehicle in a storage mode. Further, in particular aspects, the disclosure relates to a computer system for controlling a charging cycle of an energy storage system of an electric vehicle and/or for monitoring a capacity of an energy storage system of the electric vehicle in an operation mode during a usage cycle. In further particular aspects, the disclosure relates to a computer program product, a non-transitory computer-readable medium, a charging control system and an electric vehicle.

The disclosure can be applied in electric vehicles, preferably in heavy-duty electric vehicles, such as trucks, buses, and construction equipment, and in particular electric compact wheel loaders. Although the disclosure may be described with respect to a particular vehicle, the disclosure is not restricted to any particular vehicle.

### BACKGROUND

Generally, battery control system are known that can maximize state of health (SOH) efficiency and increase battery life through efficient management of state of charge (SOC). In mobile communications, it is known to reduce the charging current in order to improve the battery life time of a mobile device. Further, it is known to instruct a user of an electric vehicle to charge its battery less often to increase the battery life time. Furthermore, methods and systems for scheduling charging of an electric vehicle are known to improve the lifespan of the battery of the electric vehicle. However, the approaches known to date have various disadvantages. In particular, the special requirements arising from the use of electric vehicles on construction sites, for example, have not yet been taken into account, or at least not sufficiently, in particular not with respect to electric heavy-duty vehicles such as electric wheel loaders.

For example, on construction sites and similar fields of application, the user of electric vehicles faces the challenge that the charging infrastructure is not optimally distributed on the construction site, it is unclear what type of charging station is available and what energy requirement is to be assumed for the operating cycle. Accordingly, travelling time may need to be considered in order to reach a charging location with the electric vehicle. Furthermore, the environmental setting of the electric vehicle is not determined. For example, ambient temperatures vary not only during vehicle operation, but also during the charging process. This makes it difficult to charge the battery in such a way that it is optimally charged for the next shift, but also to charge the battery in such a way that it has the longest possible service life.

Further, the energy requirement, i.e. the charging capacity of the battery may vary from one (working) day or shift to the next (working) day or shift and from one week to another week. These additional conditions make it even more difficult for the user to estimate the required charging capacity of the battery for the following working shift and to consider the state of health and a maximized lifetime of the battery at the same time.

### SUMMARY

According to a first aspect the disclosure refers to a method for controlling a charging cycle of an energy storage system of an electric vehicle, in particular an electric compact wheel loader, in a storage mode, the method comprising following steps: determining a current state of charge value representing a current state of charge of the energy storage system during the charging cycle, wherein the current state of charge value is initially determined at a starting time of the charging cycle, wherein the charging cycle is run between a first usage cycle and a second usage cycle of the energy storage system of the vehicle, wherein the second usage cycle is subsequent to the first usage cycle; determining a usage state of charge value representing a usage of the energy storage system at an ending time of the charging cycle, which is required for operating the electric vehicle during the second usage cycle in an operation mode; determining a storage state of charge value representing a storage state of charge of the energy storage system to be reached and maintained during the charging cycle, wherein the determined usage state of charge value is larger than the determined storage state of charge value; determining a charging cycle duration value representing a duration of the charging cycle; determining a storage charging control function for controlling the charging of the energy storage system during the charging cycle in the storage mode depending on the determined current state of charge value, the determined usage state of charge value, and the determined storage state of charge value, and the determined charging-cycle-duration-value, wherein an output of the storage charging control function is a storage charging control value provided as a control signal for controlling the charging of the energy storage system during the charging cycle.

The current state of charge value may be determined by some kind of sensor.

The usage state of charge value representing a usage state of charge of the energy storage system may be determined by selecting or setting a certain charge value. In particular, the usage state of charge value may be determined by setting or selecting a certain charge value by the user or due to a factory setting. Preferably, the usage state of charge value is determined based on the usage of the vehicle during the usage cycle. This can be based on empirical values or by means of a self-learning algorithm that analyses consumption in the past usage cycles.

The storage state of charge value may be determined by selecting or setting a certain charge value. In particular, the storage state of charge value may be determined by setting or selecting a certain charge value by the user or due to a factory setting. Preferably, the storage state of charge value may be determined by selecting or setting a partial charging value of the energy storage system's charging capacity.

Preferably, the energy storage system is some kind of battery or comprises one or more batteries.

The first aspect of the disclosure may seek to solve the problem of improper charging of the energy storage system of the electric vehicle. A technical benefit may include charging the energy storage system as required for the next (working) shift while at the same time ensuring that the service life of the battery is reduced as little as possible.

Preferably, the first usage cycle is the usage of the vehicle during a first shift or a first working day, for example for 8h, and the second usage cycle is the usage of the vehicle during a second shift or second working day, for example for 8h. The second shift or second working day is subsequent to the first shift or first working day. For example, the first usage cycle could be 8h during the day on a Monday and the second usage cycle could be 8h during the day on a Tuesday. In this example, the charging cycle would ends some time in the night from Monday to Tuesday between the first and second usage cycle. Furthermore, the first usage cycle could be 8h during the day on a Friday and the second usage cycle could be 8h during the day on a Monday of the subsequent week. In this example, the charging cycle could extend over the weekend from Friday to Monday between the first and second usage cycle. It may also be understood, for example, that the first usage cycle represents a first half of a working day, for example prior a lunch break, and the second usage cycle represents a second half of a working day after, for example after the lunch break. In this case, the charging cycle could be executed during the lunch break.

Preferably, the charging cycle is to be understood as the period during which the electric vehicle is charged. In particular, it is to be understood that the charging of the electric vehicle is controlled by the storage charging control function. Preferably, the charging is controlled by the output of the storage charging control function. Preferably, the output of the storage charging control function may be some kind control signal to control the charging of the electric vehicle.

Preferably, the step of determining the charging cycle duration value depends on the end of the first usage cycle and the start of the second usage cycle. Further, preferably, the step of determining the charging cycle duration value depends on the time needed to reach the determined usage state of charge value at the start of the second usage cycle from the determined current state of charge value, which is initially determined at the end of the first usage cycle.

Preferably, the current state of charge value represents the remaining energy stored in the energy storage system. Further preferably, the usage state of charge value represents the energy or power required at the beginning of the second usage cycle to provide the vehicle with energy during the second usage cycle. Accordingly, the usage state of charge value represents the charging capacity of the energy storage system, which is required at the beginning of the second usage cycle. Preferably, the usage state of charge value is the sum of the energy consumption needed during the second usage cycle by operating the vehicle and a usage safety margin.

Preferably, the storage state of charge value represents a charging capacity of the energy storage system, which ensures that the service life of the battery is reduced as little as possible. It may be preferred that the storage state of charge value represents a value of the charging capacity of the energy storage system that is in the range of at least 5 %, preferably, 15 %, in particular preferably 25 % and/or at maximum 50 %, preferably, 40 %, in particular preferably 30 % of the charging capacity of the energy storage system. In particular, the storage state of charge value represents a value of the charging capacity of the energy storage system that is 25 % ±.

In some examples, the method comprises the step of controlling the charging of the energy storage system during the charging cycle depending on the determined storage charging control function. A technical benefit may include increasing the lifetime of the energy storage system.

In some examples, the usage state of charge value is to be determined larger than the storage state of charge value or equal to the storage state of charge value, and smaller than a maximum charging capacity of the energy storage system. Preferably, the usage state of charge value is at least 20 %, 25 %, 30 %, 40 %, 50 %, 60 %, 70 %, 80 %, 90 % or 95 % of the maximum charging capacity of the energy storage system; and/or at maximum 99 %, 95 %, 90 %, 80 %, 70 %, 60 %, 50 %, 40 %, 30 %, 25 %, 20 %.

In particular, this reduces the wear of the energy storage system, i.e. increases the state of health or the life time of the energy storage system, which preferably is a function under the influence of storage time, charging current, storage temperature and/or usage temperature. In particular, keeping the usage state of charge (delta SOC=max SOC-min SOC, asymmetrical distributed to the optimal SOC) at a most minimum level (including a safety margin) can reduce the deviation of actual state of charge to the determined storage state of charge and thereby reduce the wear, i.e. improve the state of health or increase the life time. Furthermore, the limitation of usage state of charge in accordance to the power needed during the second usage cycle lowers the time for charging at a charging station or a parking lot with any other type of grid connection to be available again for other machines.

In some examples, the method comprises the step of determining usage condition parameter values for each usage condition parameter of a usage condition parameter set of the second usage cycle of the energy storage system of the electric vehicle, wherein the usage state of charge value is to be determined depending on the determined usage condition parameter values.

It may be preferred that the usage condition parameter value for each usage condition parameter may be determined by means of a forecast algorithm. Preferably, the forecast algorithm considers usage condition parameter values of previous usage cycles. In this preferred example embodiment, the operator of the vehicle may be informed by some kind of human machine interface on how to charge the energy storage system for the remaining work day, i.e. for a current usage cycle, or next working day, i.e. a subsequent usage cycle. In particular, the human machine interface may provide an information to the user suggested by the algorithm. The information generated by the algorithm may suggest at which point in time the energy storage system being ready to operate again. Exceptions may be situations to charge for a remaining day, where a timespan or period for recharging will be shown on a human machine interface depending on the duration of a break, such as a lunch break.

In some examples, the usage condition parameter set depends on at least one of the following usage parameters during the second usage cycle: a temperature of the environment of the energy storage system, a temperature of the energy storage system, a power consumption of the energy storage system, and a usage profile of the electric vehicle. A technical benefit may include a more precise controlling of the charging cycle of the energy storage system of the electric vehicle.

In some examples, the method comprises the step of determining a minimum residual capacity value representing a minimum residual capacity of the energy storage system, wherein the minimum residual capacity value is larger than 0 kWh and smaller than the storage state of charge value or equal to the storage state of charge value.

In some examples, the method comprises the step of determining a maximum charging capacity value representing a maximum charging capacity for charging the energy storage system during the charging cycle. Preferably, the maximum charging capacity value is the sum of the usage state of charge value and an upper safety margin capacity value. Additionally or alternatively, in some examples, the method comprises the step of determining a minimum charging capacity value representing a minimum charging capacity charging the energy storage system during the charging cycle. Preferably, the minimum charging capacity value is the sum of the minimum residual capacity value and a lower safety margin capacity value.

In some examples, the storage charging control function is determined in such a manner that the determined charging capacity value does not exceed the maximum charging capacity, and/or the determined charging capacity value does not fall below the minimum charging capacity, and/or the charging power is minimized, and/or the duration, the storage state of charge value is maintained, is maximized.

In some examples, the method comprises the step of determining storage condition parameter values for each storage condition parameter of a storage condition parameter set of the energy storage system of the charging cycle, wherein the storage charging control function is to be determined depending on the determined storage condition parameter values.

In some examples, the storage condition parameter set depends on at least one of the following storage condition parameters: a temperature of the environment of the energy storage system, a temperature of the energy storage system, a number of hours of the energy storage system connected to a charging system, a type of charging option, a charging voltage, and a charging current. A technical benefit may include a more precise controlling of the charging cycle of the energy storage system of the electric vehicle.

In some examples, the method comprises the steps of comparing the determined current state of charge value with the determined storage state of charge value, comparing the determined current state of charge value with the determined usage state of charge value, determining a first charging period value representing a first charging period, which is needed to charge the energy storage system until it reaches the determined storage state of charge value, determining a second charging period value representing a second charging period, which is needed to charge the energy storage system until it reaches the determined usage state of charge value starting from the determined storage state of charge value, if the determined current state of charge value is smaller than the determined storage state of charge value, or the determined current state of charge value, if the determined current state of charge value is larger than the determined storage state of charge value and smaller than the determined usage state of charge value, and determining a third charging period value representing a third charging period, wherein the third charging period value is determined by the determined charging cycle duration value minus the determined first charging period value and minus the determined second charging period value, wherein the control signal of the storage charging control function indicates charging the energy storage system over the first charging period until it reaches the determined storage state of charge value, if the determined current state of charge value is smaller than the determined storage state of charge value, and/or charging the energy storage system over the second charging period until it reaches the determined usage state of charge value, if the determined current state of charge value is larger than the determined storage state of charge value and smaller than the determined usage state of charge value, and if the remaining determined charging cycle duration value is equal to the second charging period value or the remaining determined charging cycle duration value is smaller than the second charging period value, and/or maintaining the determined current state of charge over the third charging period, if the determined current state of charge value equals the determined storage state of charge value or the determined current state of charge value is larger than the determined storage state of charge value, and if the determined charging cycle duration value minus the determined first charging period value and minus the determined second charging period value is larger than zero seconds.
some examples, the method comprises the steps of determining a minimum charging capacity value representing a minimum charging capacity for charging the energy storage system, and determining a maximum charging capacity value representing a maximum charging capacity for charging the energy storage system, and/or determining a minimum first charging period value based on the difference of the determined current state of charge value and the determined storage state of charge value, if the determined current state of charge value is smaller than the determined storage state of charge value, multiplied by the determined maximum charging capacity, and determining a maximum first charging period value based on the difference of the determined current state of charge value and the determined storage state of charge value, if the determined current state of charge value is smaller than the determined storage state of charge value, multiplied by the determined minimum charging capacity, wherein the first charging period value is at least the determined minimum first charging period value and is at most the determined maximum first charging period value, and/or determining a minimum second charging period value based on the difference of the determined current state of charge value and the determined storage state of charge value, if the determined current state of charge value is smaller than the determined storage state of charge value, multiplied by the determined maximum charging capacity, and determining a maximum second charging period value based on the difference of the determined current state of charge value and the determined storage state of charge value, if the determined current state of charge value is smaller than the determined storage state of charge value, multiplied by the determined minimum charging capacity, wherein the second charging period value is at least the determined minimum second charging period value and is at most the determined maximum second charging period value.

In some examples, the storage condition parameter value of at least one storage condition parameter of the storage condition parameter set and/or the usage condition parameter value of at least one usage condition parameter of the usage condition parameter set of is determined via a learning algorithm.

According to a second aspect, the disclosure refers to a method for monitoring a capacity of an energy storage system of an electric vehicle, in particular an electric compact wheel loader, in an operation mode during a usage cycle, the method comprising following steps: determining a current state of charge value representing a current state of charge of the energy storage system during a first usage cycle, determining a remaining time value of the first usage cycle representing a remaining time of the first usage cycle, determining an estimated power consumption value representing an estimated power consumption during the determined remaining time of the first usage cycle and/or the second usage cyle, providing a control signal for initiating charging of the energy storage system in a charging cycle after the first usage cycle, if the determined estimated power consumption value is larger than the determined current state of charge value minus the determined storage state of charge value, or the determined current state of charge value minus the determined estimated power consumption value is smaller than the determined minimum charging capacity value.

In some examples, the charging of the energy storage system is controlled according to a method as described with respect to the first aspect or respective examples thereof.

According to a third aspect, the disclosure refers to a computer system for controlling a charging cycle of an energy storage system of an electric vehicle, the computer system comprising a processing circuitry configured to perform the method as described according to the first aspect and/or second aspect and/or its examples. The third aspect of the disclosure may seek to solve the problem of improper charging of the energy storage system of the electric vehicle. A technical benefit may include increasing the lifetime of the energy storage system.

According to a fourth aspect, the disclosure refers to a computer program product comprising program code for performing, when executed by a processor device, the method as described according to the first aspect and/or second aspect and/or its examples. The fourth aspect of the disclosure may seek to solve the problem of improper charging of the energy storage system of the electric vehicle. A technical benefit may include increasing the lifetime of the energy storage system.

According to a fifth aspect, the disclosure refers to a non-transitory computer-readable storage medium comprising instructions, which when executed by the processor device, cause the processor device to perform the method as described according to the first aspect and/or second aspect and/or its examples. The fifth aspect of the disclosure may seek to solve the problem of improper charging of the energy storage system of the electric vehicle. A technical benefit may include increasing the lifetime of the energy storage system.

According to a sixth aspect, the disclosure refers to a control system comprising one or more control units configured to perform the method as described according to the first aspect and/or second aspect and/or its examples. The sixth aspect of the disclosure may seek to solve the problem of improper charging of the energy storage system of the electric vehicle. A technical benefit may include increasing the lifetime of the energy storage system.

According to a seventh aspect, the disclosure refers to a charging control system comprising one or more control units configured to perform the method as described according to the first aspect and/or second aspect and/or its examples. The seventh aspect of the disclosure may seek to solve the problem of improper charging of the energy storage system of the electric vehicle. A technical benefit may include increasing the lifetime of the energy storage system.

In some examples, the charging control system comprising at least one charging point for charging the electric vehicle.

According to an eighth aspect, the disclosure relates to an electric vehicle, in particular an electric compact wheel loader, comprising a computer system as described according to the third aspect and/or a charging control system as described according to the seventh aspect. The eighth aspect of the disclosure may seek to solve the problem of improper charging of the energy storage system of the electric vehicle. A technical benefit may include increasing the lifetime of the energy storage system.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is an exemplary of an electric vehicle comprising a charging control system configured to perform the method for controlling a charging cycle of an energy storage system of the electric vehicle according to one example.
**FIG. 2** is a block diagram of a method for controlling a charging cycle of an energy storage system of an electric vehicle according to one example.
**Fig. 3** is a chart of the storage capacity of the energy storage system of the vehicle disclosed in Figure 1 over a period of charging and usage of the vehicle.
**Fig. 4** is a block diagram of a method for controlling a charging cycle of an energy storage system of an electric vehicle according to a further example.
**FIG. 5** is a block diagram of a method for monitoring a capacity of an energy storage system of the wheel loader as disclosed in Figure 1 according to another example.

### DETAILED DESCRIPTION

Aspects set forth below represent the necessary information to enable those skilled in the art to practice the disclosure.

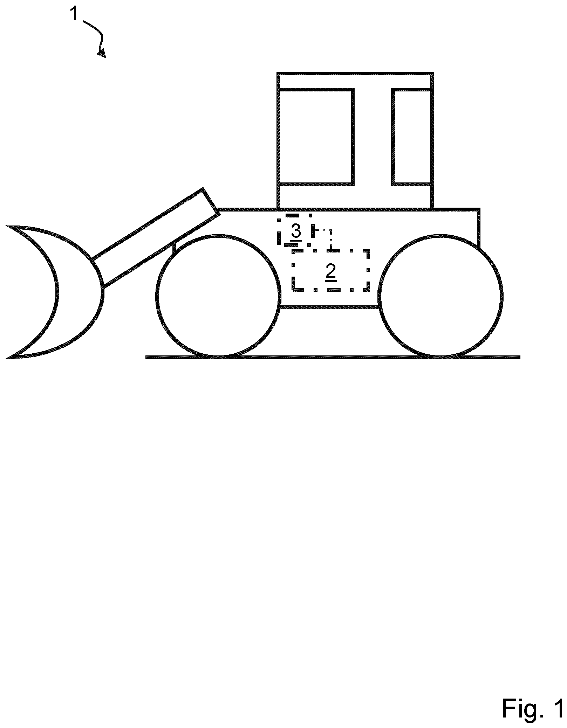

Figure 1 is an exemplary of an electric compact wheel loader 1. The electric compact wheel loader 1 comprises a charging control system 3 configured to perform the method 1000 for controlling a charging cycle of an energy storage system 2. Further, the charging control system 3 is configured to perform the method 2000 for monitoring the capacity of the energy storage system 2.

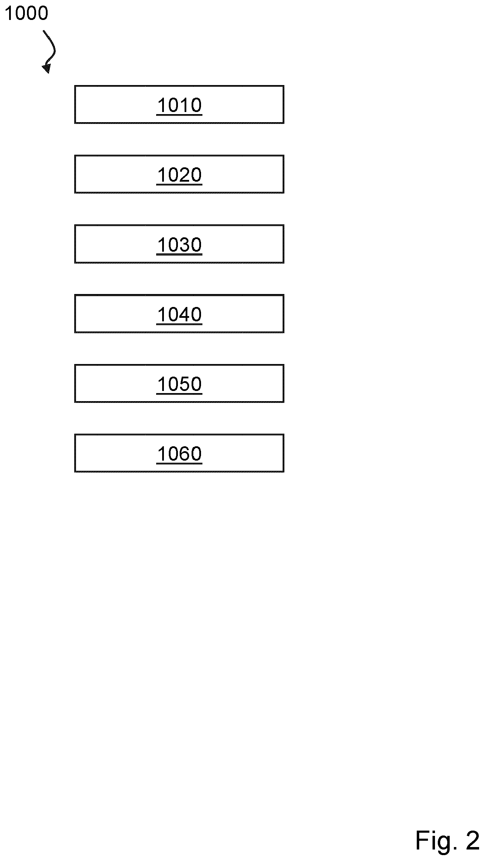

Figure 2 is a block diagram of the method 1000 for controlling the charging cycle of the energy storage system 2 of the electric wheel loader 1 shown in Figure 1 according to one example.

The method comprises the step of determining 1010 a current state of charge value. The current state of charge value is initially determined at the beginning of the charging cycle. The determination of the current state of charge value is repeated regularly or continuously during the charging cycle. Thus, the current state of charge value represents the current state of charge of the energy storage system 2 during the charging cycle 10.

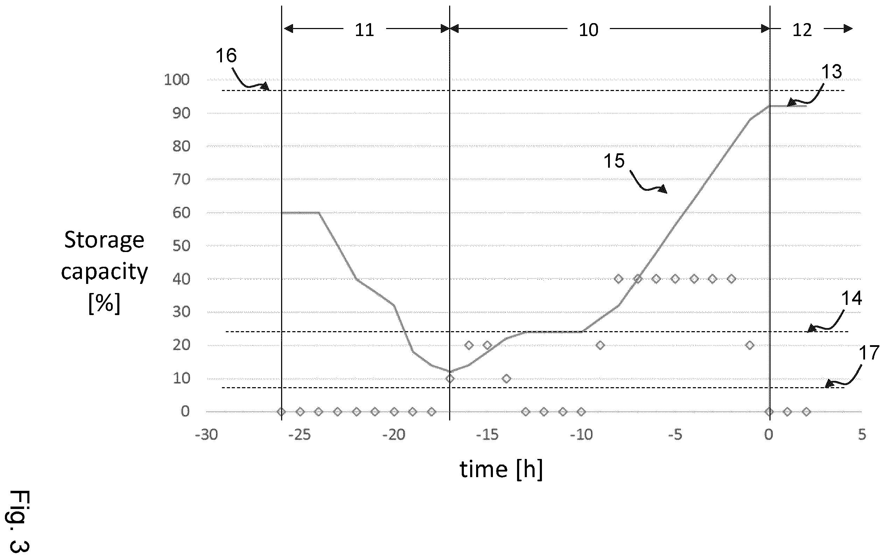

The charging cycle 10 is run between a first usage cycle 11 and a second usage cycle 12 of the energy storage system 2 of the electric wheel loader 1. In this case, the first usage cycle represents a first work shift and the second usage cycle represents a second work shift. The sequence of these cycles is visualized in Figure 3, which represents a graph of the storage capacity of the energy storage system over time. The graph represents the current state of charge of the energy storage system. During the first usage cycle 11, the current state of charge value drops over time due to the usage of the electric vehicle during the first work shift. During the charging cycle the current state of charge of the energy storage system rises as the energy storage system is being charged in accordance to the determined storage charging control function. During the charging cycle the graph of the current state of charge value represents or corresponds to an output of the storage charging control function in the charging cycle 10. It can be seen from Figure 3 that the current state of charge value drops again once the second usage cycles and, thus, the operation of the electric vehicle starts again.

In the following paragraphs, it is further explained, how the storage charging control function is determined 1040 for charging of the energy storage system 2 during the charging cycle 10 in the storage mode.

For determining the storage charging control function, the method comprises the additional step of determining 1020 a usage state of charge value 13. This usage state of charge value represents a usage state of charge of the energy storage system 2 at an ending time of the charging cycle 10. The usage state of charge value represents the storage capacity of the energy storage system 2, which is required for operating the electric vehicle 1 during the second usage cycle 12 in an operation mode. The usage state of charge value is to be determined larger than the storage state of charge value or equal to the storage state of charge value, and smaller than a maximum charging capacity of the energy storage system. Further, the usage state of charge value 13 is to be determined depending on usage condition parameter values to be determined 1070. In this example, the usage condition parameter set depends on at least one of the following usage parameters during the second usage cycle: a temperature of the environment of the energy storage system, a temperature of the energy storage system, a power consumption of the energy storage system, and a usage profile of the electric vehicle. For example, it needs to be considered that the process of discharging depends on the temperature of the energy storage system and the temperature of the environment.

Further, the method comprises the step of determining 1030 a storage state of charge value 14 representing a storage state of charge of the energy storage system 2 to be reached and maintained during the charging cycle 10. The determined usage state of charge value 13 is larger than the determined storage state of charge value 14.

Finally, for determining 1050 the storage charging control function, the method comprises the step of determining 1040 a charging cycle duration value representing a duration of the charging cycle 10.

Accordingly, the storage charging control function is then determined 1050 depending on the determined current state of charge value, the determined usage state of charge value 13, the determined storage state of charge value14, and the determined charging-cycle-duration-value.

The storage charging control function provides an output which is a storage charging control value provided as a control signal for controlling the charging of the energy storage system during the charging cycle. Depending on this output the storage capacity of the energy storage system changes during the charging cycle 10 as visualized in Figure 3. Therefore, depending on the determined storage charging control function, the charging of the energy storage system during the charging cycle is controlled 1060.

Figure 3 visualizes how the storage capacity drops during the first usage cycle 11 of 8h from an initial storage capacity of 60 % of the energy storage system 2 to a storage capacity of around 10 -15 % at the end of the first usage cycle 11. With the start of the charging cycle 10, the energy storage system is at first charged up to the determined storage state of charge value 14 within 4h depending on the output 15 of the storage charging control function. Subsequently, the capacity of the energy storage system is maintained at the value of the storage state of charge value 14 for 3h. Maintaining the capacity of the energy storage system 2 at this level increases the life time of the energy storage system 2 or minimizes the wear of the energy storage system 2. Subsequently, over a period of 10h, the energy storage system 2 is charged up to determined usage state of charge value 13, which is required for the second usage cycle 12.

It is to be understood, that, preferably, the storage charging control function is determined in such a manner that the determined charging capacity value does not exceed the maximum charging capacity value 16, and the determined charging capacity value does not fall below the minimum charging capacity value 17, and the charging power is minimized, and the duration, the storage state of charge value is maintained, is maximized.

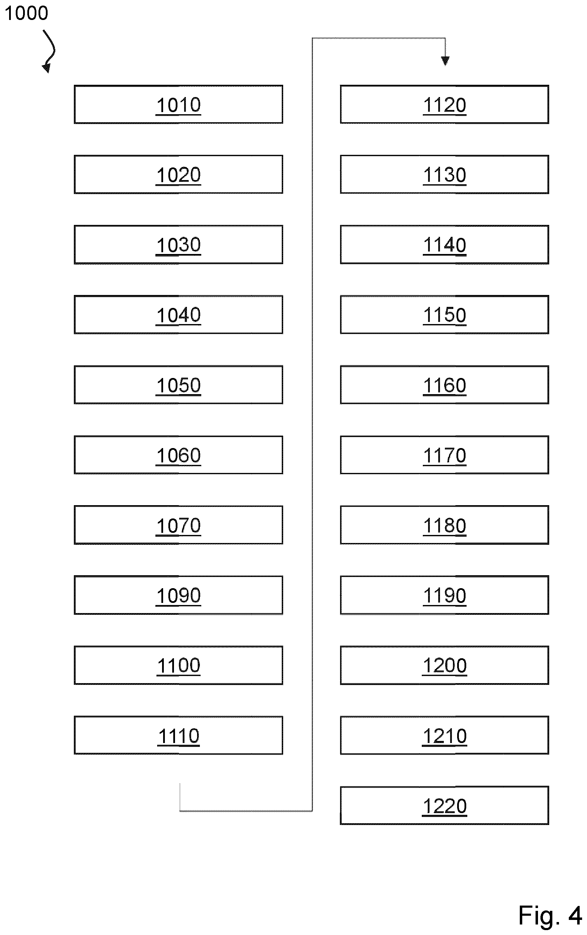

Figure 4 is a block diagram of a method 1000 for controlling the charging cycle of the energy storage system 2 of the compact wheel loader 1 according to a further example. This example is based on the example described with respect to Figure 2. The example disclosed in view of Figure 4 includes the steps 1010 to 1060 as described with respect to the example described in view of Figure 2. Additionally, the example embodiment referred to in Figure 4 comprises several additional steps as outlined in the following. This has the technical effect to ensure that the service life of the energy storage system, for example a battery, is reduced as little as possible.

The method 1000 according to the example outlined in Figure 4 comprises the step of determining 1070 usage condition parameter values for each usage condition parameter of a usage condition parameter set of the second usage cycle of the energy storage system of the electric vehicle. In this example, the usage state of charge value is to be determined depending on the determined usage condition parameter values. The usage condition parameter set depends on at least one of the following usage parameters during the second usage cycle: a temperature of the environment of the energy storage system, a temperature of the energy storage system, a power consumption of the energy storage system, and a usage profile of the electric vehicle.

Further, the method 1000 comprises the steps of determining 1090 a maximum charging capacity value 16 representing a maximum charging capacity for charging the energy storage system during the charging cycle; and determining 1100 a minimum charging capacity value 17 representing a minimum charging capacity for charging the energy storage system 2 during the charging cycle. It is preferred, that the maximum charging capacity value 16 is not exceeded when charging the energy storage system. Furthermore, it is preferred, that minimum charging capacity value 17 is not undercut, in particular when using the electric vehicle 1 and, thus, the energy storage system 2 in a usage cycle.

Furthermore, the method comprises the step of determining 1110 storage condition parameter values for each storage condition parameter of a storage condition parameter set of the energy storage system of the charging cycle, wherein the storage charging control function is to be determined depending on the determined storage condition parameter values.

It is to be understood, that the control signal of the storage charging control function in the present example method referred to in Figure 4 may indicate the following:

It may indicate charging the energy storage system 2 over a first charging period until it reaches the determined storage state of charge value, if the determined current state of charge value is smaller than the determined storage state of charge value. Additionally or alternatively, it may indicate charging the energy storage system 2 over the second charging period until it reaches the determined usage state of charge value, if the determined current state of charge value is larger than the determined storage state of charge value and smaller than the determined usage state of charge value, and if the remaining determined charging cycle duration value is equal to the second charging period value or the remaining determined charging cycle duration value is smaller than the second charging period value. Furthermore, additionally or alternatively, it may indicate maintaining the determined current state of charge over the third charging period, if the determined current state of charge value equals the determined storage state of charge value or the determined current state of charge value is larger than the determined storage state of charge value, and if the determined charging cycle duration value minus the determined first charging period value and minus the determined second charging period value is larger than zero seconds.

In particular, the method comprises the steps of determining 1170 a minimum charging power value representing a minimum charging capacity for charging the energy storage system 2, and determining 1180 a maximum charging power value representing a maximum charging capacity for charging the energy storage system 2.

Depending on steps 1170 and 1180, the method comprises the steps of determining 1190 a minimum first charging period value based on the difference of the determined current state of charge value and the determined storage state of charge value, if the determined current state of charge value is smaller than the determined storage state of charge value, multiplied by the determined maximum charging power, and determining 1200 a maximum first charging period value based on the difference of the determined current state of charge value and the determined storage state of charge value, if the determined current state of charge value is smaller than the determined storage state of charge value, multiplied by the determined minimum charging power, wherein the first charging period value is at least the determined minimum first charging period value and is at most the determined maximum first charging period value.

Furthermore, depending on steps 1170 and 1180, the method comprises the steps of determining 1210 a minimum second charging period value based on the difference of the determined current state of charge value and the determined storage state of charge value, if the determined current state of charge value is smaller than the determined storage state of charge value, multiplied by the determined maximum charging power, and determining 1220 a maximum second charging period value based on the difference of the determined current state of charge value and the determined storage state of charge value, if the determined current state of charge value is smaller than the determined storage state of charge value, multiplied by the determined minimum charging power, wherein the second charging period value is at least the determined minimum second charging period value and is at most the determined maximum second charging period value.

Preferably, the storage condition parameter value of at least one storage condition parameter of the storage condition parameter set and/or the usage condition parameter value of at least one usage condition parameter of the usage condition parameter set of is determined via a learning algorithm.

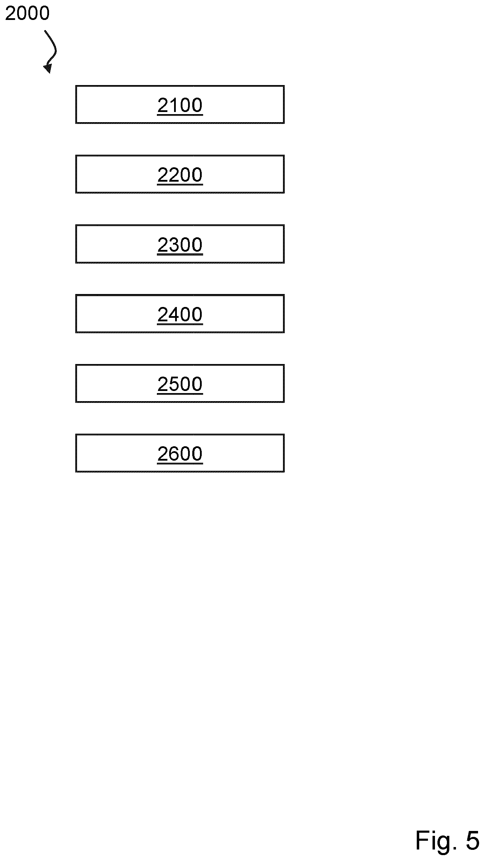

Figure 5 is a block diagram of a method 2000 for monitoring a capacity an energy storage system 2 of the wheel loader 1 as disclosed in Figure 1 according to one example. This method comprises several steps as outlined in the following.

The method comprises the step of determining 2010 a current state of charge value representing a current state of charge of the energy storage system 2 during a first usage cycle 10. Further, the method comprises the step of determining 2020 a remaining time value of the first usage cycle 11 representing a remaining time of the first usage cycle 11. Finally, the method comprises the step of determining 2030 an estimated power consumption value representing an estimated power consumption during the determined remaining time of the first usage cycle and/or during the second usage cycle.

Depending on the determined current state of charge value, the determined remaining time value and the determined estimated power consumption, a control signal for initiating charging of the energy storage system 2 in a charging cycle after the first usage cycle is provided 2040. The control signal for initiating charging of the energy storage system 2 is provided 2040 in a charging cycle after the first usage cycle, if the determined estimated power consumption value is larger than the determined current state of charge value minus the determined storage state of charge value, or if the determined current state of charge value minus the determined estimated power consumption value is smaller than the determined minimum charging capacity value.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A method (1000) for controlling a charging cycle of an energy storage system (2) of an electric vehicle (1), in particular an electric compact wheel loader, in a storage mode, the method comprising following steps:
- Determining (1010) a current state of charge value representing a current state of charge of the energy storage system during the charging cycle, wherein the current state of charge value is initially determined at a starting time of the charging cycle (10), wherein the charging cycle (10) is run between a first usage cycle (11) and a second usage cycle (12) of the energy storage system (2) of the vehicle (1), wherein the second usage cycle (12) is subsequent to the first usage cycle (11);
- Determining (1020) a usage state of charge value (13) representing a usage state of charge of the energy storage system (2) at an ending time of the charging cycle (10), which is required for operating the electric vehicle during the second usage cycle (12) in an operation mode;
- Determining (1030) a storage state of charge value (14) representing a storage state of charge of the energy storage system (2) to be reached and maintained during the charging cycle (10), wherein the determined usage state of charge value is larger than the determined storage state of charge value;
- Determining (1040) a charging cycle duration value representing a duration of the charging cycle,
- Determining (1050) a storage charging control function for controlling the charging of the energy storage system during the charging cycle in the storage mode depending on
∘ the determined current state of charge value,
∘ the determined usage state of charge value,
∘ the determined storage state of charge value, and
∘ the determined charging-cycle-duration-value ,
wherein an output (15) of the storage charging control function is a storage charging control value provided as a control signal for controlling the charging of the energy storage system during the charging cycle.

2. The method of claim 1, comprising the step of controlling (1060) the charging of the energy storage system during the charging cycle depending on the determined storage charging control function.

3. The method of any of claims 1-2, wherein the usage state of charge value is to be determined
- larger than the storage state of charge value or equal to the storage state of charge value, and
- smaller than a maximum charging capacity of the energy storage system.

4. The method of any of claims 1-3, comprising the step of
- Determining (1070) usage condition parameter values for each usage condition parameter of a usage condition parameter set of the second usage cycle of the energy storage system of the electric vehicle, wherein the usage state of charge value is to be determined depending on the determined usage condition parameter values.

5. The method of any of claims 1-4, wherein the usage condition parameter set depends on at least one of the following usage parameters during the second usage cycle:
- a temperature of the environment of the energy storage system,
- a temperature of the energy storage system,
- a power consumption of the energy storage system, and
- a usage profile of the electric vehicle.

6. The method of any of claims 1-5, comprising the step of
- Determining (1080) a minimum residual capacity value (18) representing a minimum residual capacity of the energy storage system, wherein the minimum residual capacity value is larger than 0 kWh and smaller than the storage state of charge value or equal to the storage state of charge value.

7. The method of any of claims 1-6, comprising the steps of
- Determining (1090) a maximum charging capacity value (16) representing a maximum charging capacity for charging the energy storage system during the charging cycle; and/or
- Determining (1100) a minimum charging capacity value (17) representing a minimum charging capacity for charging the energy storage system during the charging cycle.

8. The method of any of claims 1-7, wherein the storage charging control function is determined in such a manner that
- the determined charging capacity value does not exceed the maximum charging capacity value (16), and/or
- the determined charging capacity value does not fall below the minimum charging capacity value (17), and/or
- the charging power is minimized, and/or
- the duration, the storage state of charge value is maintained, is maximized.

9. The method of any of claims 1-8, comprising the step of
- determining (1110) storage condition parameter values for each storage condition parameter of a storage condition parameter set of the energy storage system of the charging cycle, wherein the storage charging control function is to be determined depending on the determined storage condition parameter values.

10. The method of claim 9, wherein the storage condition parameter set depends on at least one of the following storage condition parameters:
- a temperature of the environment of the energy storage system,
- a temperature of the energy storage system,
- a number of hours of the energy storage system connected to a charging system,
- a type of charging option,
- a charging voltage, and
- a charging current.

11. The method of any of claims 1-10, comprising the steps of:
- comparing (1120) the determined current state of charge value with the determined storage state of charge value,
- comparing (1130) the determined current state of charge value with the determined usage state of charge value,
- determining (1140) a first charging period value representing a first charging period, which is needed to charge the energy storage system (2) until it reaches the determined storage state of charge value,
- determining (1150) a second charging period value representing a second charging period, which is needed to charge the energy storage system (2) until it reaches the determined usage state of charge value starting from
∘ the determined storage state of charge value, if the determined current state of charge value is smaller than the determined storage state of charge value, or
∘ the determined current state of charge value, if the determined current state of charge value is larger than the determined storage state of charge value and smaller than the determined usage state of charge value, and
- determining (1160) a third charging period value representing a third charging period, wherein the third charging period value is determined by the determined charging cycle duration value minus the determined first charging period value and minus the determined second charging period value,
- wherein the control signal of the storage charging control function indicates
∘ charging the energy storage system (2) over the first charging period until it reaches the determined storage state of charge value,
▪ if the determined current state of charge value is smaller than the determined storage state of charge value, and/or
∘ charging the energy storage system (2) over the second charging period until it reaches the determined usage state of charge value,
▪ if the determined current state of charge value is larger than the determined storage state of charge value and smaller than the determined usage state of charge value, and
▪ if the remaining determined charging cycle duration value is equal to the second charging period value or the remaining determined charging cycle duration value is smaller than the second charging period value, and/or
∘ maintaining the determined current state of charge over the third charging period,
▪ if the determined current state of charge value equals the determined storage state of charge value or the determined current state of charge value is larger than the determined storage state of charge value, and
▪ if the determined charging cycle duration value minus the determined first charging period value and minus the determined second charging period value is larger than zero seconds.

12. The method of claims 1-11, comprising the steps of
- determining (1170) a minimum charging power value representing a minimum charging capacity for charging the energy storage system (2), and
- determining (1180) a maximum charging power value representing a maximum charging capacity for charging the energy storage system (2),
and/or
- determining (1190) a minimum first charging period value based on the difference of the determined current state of charge value and the determined storage state of charge value, if the determined current state of charge value is smaller than the determined storage state of charge value, multiplied by the determined maximum charging power, and
- determining (1200) a maximum first charging period value based on the difference of the determined current state of charge value and the determined storage state of charge value, if the determined current state of charge value is smaller than the determined storage state of charge value, multiplied by the determined minimum charging power, wherein
- the first charging period value is at least the determined minimum first charging period value and is at most the determined maximum first charging period value,
and/or
- determining (1210) a minimum second charging period value based on the difference of the determined current state of charge value and the determined storage state of charge value, if the determined current state of charge value is smaller than the determined storage state of charge value, multiplied by the determined maximum charging power, and
- determining (1220) a maximum second charging period value based on the difference of the determined current state of charge value and the determined storage state of charge value, if the determined current state of charge value is smaller than the determined storage state of charge value, multiplied by the determined minimum charging power, wherein
- the second charging period value is at least the determined minimum second charging period value and is at most the determined maximum second charging period value.

13. The method of any of claims 1-12, wherein the storage condition parameter value of at least one storage condition parameter of the storage condition parameter set and/or the usage condition parameter value of at least one usage condition parameter of the usage condition parameter set is determined via a learning algorithm.

14. A method (2000) for monitoring a capacity of an energy storage system (2) of an electric vehicle (1), in particular an electric compact wheel loader, in an operation mode during a usage cycle, the method comprising the following steps:
- determining (2010) a current state of charge value representing a current state of charge of the energy storage system during a first usage cycle,
- determining (2020) a remaining time value of the first usage cycle representing a remaining time of the first usage cycle,
- determining (2030) an estimated power consumption value representing an estimated power consumption during the determined remaining time of the first usage cycle (11) and/or during the second usage cycle (12),
- providing (2040) a control signal for initiating charging of the energy storage system (2) in a charging cycle after the first usage cycle, if
∘ the determined estimated power consumption value is larger than the determined current state of charge value minus the determined storage state of charge value, or
∘ the determined current state of charge value minus the determined estimated power consumption value is smaller than the determined minimum charging capacity value.

15. The method of claim 14, wherein the charging of the energy storage system (2) is controlled according to a method of any of claims 1-13.

16. A computer system for controlling a charging cycle of an energy storage system of an electric vehicle and/or for monitoring a capacity of an energy storage system (2) of the electric vehicle (1) in an operation mode during a usage cycle, the computer system comprising a processing circuitry configured to perform the method of any of claims 1-13 and/or of any of claims 14-15.

17. A computer program product comprising program code for performing, when executed by a processor device, the method of any of claims 1-13 and/or of any of claims 14-15.

18. A non-transitory computer-readable storage medium comprising instructions, which, when executed by the processor device, cause the processor device to perform the method of any of claims 1-13 and/or of any of claims 14-15.

19. A charging control system (3) comprising one or more control units configured to perform the method according to any of claims 1-13 and/or of any of claims 14-15.

20. A charging control system (3) comprising at least one charging point for charging the electric vehicle (1).

21. An electric vehicle (1), in particular an electric compact wheel loader, comprising a computer system of claim 16 and/or a charging control system (3) of any of claims 19-20.

## Amended claims

### Amended claims in accordance with Rule 137(2) EPC.

1. A method (2000) for monitoring a capacity of an energy storage system (2) of an electric vehicle (1), in particular an electric compact wheel loader during a usage cycle, the method comprising the following steps:
- determining (2010) a current state of charge value representing a current state of charge of the energy storage system during a first usage cycle,
- determining (2020) a remaining time value of the first usage cycle,
- determining (2030) an estimated power consumption value representing an estimated power consumption during the determined remaining time of the first usage cycle (11) and during the second usage cycle (12),
- providing (2040) a control signal for initiating charging of the energy storage system (2) in a charging cycle after the first usage cycle, if
o the determined estimated power consumption value is larger than the determined current state of charge value minus the determined storage state of charge value, or
o the determined current state of charge value minus the determined estimated power consumption value is smaller than the determined minimum charging capacity value.

2. A method comprising the steps of the method of claim 1, and further comprises controlling the charging of the energy storage system (2) comprising following steps:
- Determining (1010) a current state of charge value representing a current state of charge of the energy storage system during the charging cycle, wherein the current state of charge value is initially determined at a starting time of the charging cycle (10) and the determination of the current state of charge value is repeated regularly or continuously during the charging cycle, wherein the charging cycle (10) is run between a first usage cycle (11) and a second usage cycle (12) of the energy storage system (2) of the vehicle (1), wherein the second usage cycle (12) is subsequent to the first usage cycle (11);
- Determining (1020) a usage state of charge value (13) representing a usage state of charge of the energy storage system (2) at an ending time of the charging cycle (10), which is required for operating the electric vehicle during the second usage cycle (12);
- Determining (1030) a storage state of charge value (14) representing a storage state of charge of the energy storage system (2) to be reached and maintained during the charging cycle (10), wherein the determined usage state of charge value is larger than the determined storage state of charge value;
- Determining (1040) a charging cycle duration value representing a duration of the charging cycle,
- Determining (1050) a storage charging control function for controlling the charging of the energy storage system during the charging cycle depending on
o the determined current state of charge value,
o the determined usage state of charge value,
o the determined storage state of charge value, and
o the determined charging-cycle-duration-value ,
wherein an output (15) of the storage charging control function is a storage charging control value provided as a control signal for controlling the charging of the energy storage system during the charging cycle.

3. The method of claim 2, comprising the step of controlling (1060) the charging of the energy storage system during the charging cycle depending on the determined storage charging control function.

4. The method of any of claims 2 and 3, wherein the usage state of charge value is to be determined
- larger than the storage state of charge value or equal to the storage state of charge value, and
- smaller than a maximum charging capacity of the energy storage system.

5. The method of any of claims 2-4, comprising the step of
- Determining (1070) usage condition parameter values for each usage condition parameter of a usage condition parameter set of the second usage cycle of the energy storage system of the electric vehicle, wherein the usage state of charge value is to be determined depending on the determined usage condition parameter values.

6. The method of any of claims 2-5, wherein the usage condition parameter set depends on at least one of the following usage parameters during the second usage cycle:
- a temperature of the environment of the energy storage system,
- a temperature of the energy storage system,
- a power consumption of the energy storage system, and
- a usage profile of the electric vehicle.

7. The method of any of claims 2-6, comprising the step of
- Determining (1080) a minimum residual capacity value (18) representing a minimum residual capacity of the energy storage system, wherein the minimum residual capacity value is larger than 0 kWh and smaller than the storage state of charge value or equal to the storage state of charge value.

8. The method of any of claims 2 to 7, comprising the steps of
- Determining (1090) a maximum charging capacity value (16) representing a maximum charging capacity for charging the energy storage system during the charging cycle; and/or
- Determining (1100) a minimum charging capacity value (17) representing a minimum charging capacity for charging the energy storage system during the charging cycle.

9. The method of any of claims 2-8, wherein the storage charging control function is determined in such a manner that
- the determined charging capacity value does not exceed the maximum charging capacity value (16), and/or
- the determined charging capacity value does not fall below the minimum charging capacity value (17), and/or
- the charging power is minimized, and/or
- the duration, the storage state of charge value is maintained, is maximized.

10. The method of any of claims 2-9, comprising the step of
- determining (1110) storage condition parameter values for each storage condition parameter of a storage condition parameter set of the energy storage system of the charging cycle, wherein the storage charging control function is to be determined depending on the determined storage condition parameter values.

11. The method of claim 10, wherein the storage condition parameter set depends on at least one of the following storage condition parameters:
- a temperature of the environment of the energy storage system,
- a temperature of the energy storage system,
- a number of hours of the energy storage system connected to a charging system,
- a type of charging option,
- a charging voltage, and
- a charging current.

12. The method of any of claims 21-11, comprising the steps of:
- comparing (1120) the determined current state of charge value with the determined storage state of charge value,
- comparing (1130) the determined current state of charge value with the determined usage state of charge value,
- determining (1140) a first charging period value representing a first charging period, which is needed to charge the energy storage system (2) until it reaches the determined storage state of charge value,
- determining (1150) a second charging period value representing a second charging period, which is needed to charge the energy storage system (2) until it reaches the determined usage state of charge value starting from
o the determined storage state of charge value, if the determined current state of charge value is smaller than the determined storage state of charge value, or
o the determined current state of charge value, if the determined current state of charge value is larger than the determined storage state of charge value and smaller than the determined usage state of charge value, and
- determining (1160) a third charging period value representing a third charging period, wherein the third charging period value is determined by the determined charging cycle duration value minus the determined first charging period value and minus the determined second charging period value,
- wherein the control signal of the storage charging control function indicates
o charging the energy storage system (2) over the first charging period until it reaches the determined storage state of charge value,
▪ if the determined current state of charge value is smaller than the determined storage state of charge value, and/or
o charging the energy storage system (2) over the second charging period until it reaches the determined usage state of charge value,
▪ if the determined current state of charge value is larger than the determined storage state of charge value and smaller than the determined usage state of charge value, and
▪ if the remaining determined charging cycle duration value is equal to the second charging period value or the remaining determined charging cycle duration value is smaller than the second charging period value, and/or
o maintaining the determined current state of charge over the third charging period,
▪ if the determined current state of charge value equals the determined storage state of charge value or the determined current state of charge value is larger than the determined storage state of charge value, and
▪ if the determined charging cycle duration value minus the determined first charging period value and minus the determined second charging period value is larger than zero seconds.

13. The method of claims 2-12, comprising the steps of
- determining (1170) a minimum charging power value representing a minimum charging capacity for charging the energy storage system (2), and
- determining (1180) a maximum charging power value representing a maximum charging capacity for charging the energy storage system (2),
and/or
- determining (1190) a minimum first charging period value based on the difference of the determined current state of charge value and the determined storage state of charge value, if the determined current state of charge value is smaller than the determined storage state of charge value, multiplied by the determined maximum charging power, and
- determining (1200) a maximum first charging period value based on the difference of the determined current state of charge value and the determined storage state of charge value, if the determined current state of charge value is smaller than the determined storage state of charge value, multiplied by the determined minimum charging power, wherein
- the first charging period value is at least the determined minimum first charging period value and is at most the determined maximum first charging period value, and/or
- determining (1210) a minimum second charging period value based on the difference of the determined current state of charge value and the determined storage state of charge value, if the determined current state of charge value is smaller than the determined storage state of charge value, multiplied by the determined maximum charging power, and
- determining (1220) a maximum second charging period value based on the difference of the determined current state of charge value and the determined storage state of charge value, if the determined current state of charge value is smaller than the determined storage state of charge value, multiplied by the determined minimum charging power, wherein
- the second charging period value is at least the determined minimum second charging period value and is at most the determined maximum second charging period value.

14. The method of any of claims 2-13, wherein the storage condition parameter value of at least one storage condition parameter of the storage condition parameter set and/or the usage condition parameter value of at least one usage condition parameter of the usage condition parameter set is determined via a learning algorithm.

15. A computer system comprising a processing circuitry configured to perform the method of any of claims 1-14.

16. A computer program product comprising program code for performing, when executed by a processor device, the method of any of claims 1-14.

17. A non-transitory computer-readable storage medium comprising instructions, which, when executed by the processor device, cause the processor device to perform the method of any of claims 1-14.

18. A charging control system (3) comprising one or more control units configured to perform the method according to any of claims 1-14.

19. A charging control system (3) according to claim 18, further comprising at least one charging point for charging the electric vehicle (1).

20. An electric vehicle (1), in particular an electric compact wheel loader, comprising a computer system of claim 15 and/or a charging control system (3) of any of claims 18-19.
